# EUROPEAN PATENT APPLICATION

(11) **EP 4 400 344 A1**
(43) Date of publication of application: **17.07.2024**
(21) Application number: 23217356.7
(22) Date of filing: 15.12.2023
(51) Int. Cl.: B60J 5/10, B29C 65/02, B29C 65/44, B29C 65/46, B29C 65/64, B29C 65/00

(54) **LIFTGATE METALLIC REINFORCEMENT THERMAL JOINING TO THE THERMOPLASTIC INNER PANEL**

(30) Priority: 10.01.2023 US 202363438130 P; 15.11.2023 US 202363599037 P
(71) Applicant: Magna Exteriors Inc., Aurora, ON L4G 7K1 (CA)
(72) Inventor: Wang, Yao, TROY, 48086 (US); CHAAYA, Riad, CLARKSTON, 48348 (US); GILLARD, Laurent, BEVERLY HILLS, 48025 (US); VOHLIDAL, Ondrej, TROY, 48098 (US)
(74) Representative: Glawe, Delfs, Moll

(57) **Abstract**

A reinforced lift gate panel arrangement that includes a lift gate panel formed of fiber filled polymer material. The lift gate panel has a structural side with a connection surface region. The arrangement further includes at least one reinforcement bracket with a panel contact side and a tool contact side with at least one aperture formed through the reinforcement bracket that extends from the panel contact side to the tool contact side. There is at least one mechanical lock formed between the lift gate panel and the reinforcement bracket. The mechanical lock is formed by a portion of the fiber filled polymer material curing in the at least one aperture of the reinforcement bracket.

## Description

### FIELD OF THE INVENTION

The present invention relates to a method of joining metal reinforcements to thermoplastic liftgate inner panels using various thermal joining techniques.

### BACKGROUND OF THE INVENTION

In the automotive field it has been desirable to produce exterior components out of polymeric material, rather than by forming the components out of metal. In particular lift gates for a vehicle have traditionally been formed of stamped metal components. More recently there have been several different lift gates produced that are formed of thermoplastic material. This provides a substantial reduction in weight, as well as providing greater variety in style and design, sense the thermoplastic material is able to be more easily formed with greater angles, forming the lift gate or other components out of thermoplastics can sometimes require the attachment of reinforcements. Typically, reinforcements used in thermoplastic lift gates are metal plates which are fastened to the interior portion of the lift gate, connecting the metal reinforcements at specific locations is accomplished using fasteners or adhesives. However, this is problematic because the use of fasteners increases production time and complexity, while using adhesives increases costs and creates recycling difficulties, since the adhesive material is adhered to the metal reinforcement. It is desirable to develop new methods for connecting the reinforcements at desired locations on the thermoplastic lift gate.

### SUMMARY OF THE INVENTION

A reinforced lift gate panel arrangement that includes a lift gate panel formed of fiber filled polymer material. The lift gate panel has a structural side with a connection surface region. The arrangement further includes at least one reinforcement bracket with a panel contact side and a tool contact side with at least one aperture formed through the reinforcement bracket that extends from the panel contact side to the tool contact side. There is at least one mechanical lock formed between the lift gate panel and the reinforcement bracket. The mechanical lock is formed by a portion of the fiber filled polymer material curing in the at least one aperture of the reinforcement bracket.

In the present embodiment of the invention the at least one reinforcement bracket is connected to the lift gate panel using only the at least one mechanical lock and without adhesives. Also, in the present embodiment of the invention the at least one reinforcement bracket is connected to the lift gate panel using only the at least one mechanical lock and without threaded fasteners.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Fig. 1 is a rear side elevational view of a liftgate arrangement according to one embodiment of the present invention.
Fig. 2 is a side elevational schematic view of a method of forming a mechanical connection between a reinforcement bracket to a liftgate panel.
Fig. 3 is an enlarged cross sectional side elevational view of a reinforcement bracket connected to a lift gate panel.
Fig. 4 is a side elevational view of a reinforcement bracket according to one embodiment of the present invention.
Fig. 5 an enlarged side perspective of a portion of the reinforcement bracket.
Fig. 6 is an enlarged elevational view of one group of apertures formed in the reinforcement bracket.
Fig. 7 is an enlarged cross sectional side elevational view of an alternative mechanical connection between a reinforcement bracket and a liftgate panel according to another embodiment of the invention.

### DETAILED DESCRIPTION OF THE PREFERRED EMBODIMENTS

The following description of the preferred embodiments is merely exemplary in nature and is in no way intended to limit the invention, its application, or uses.

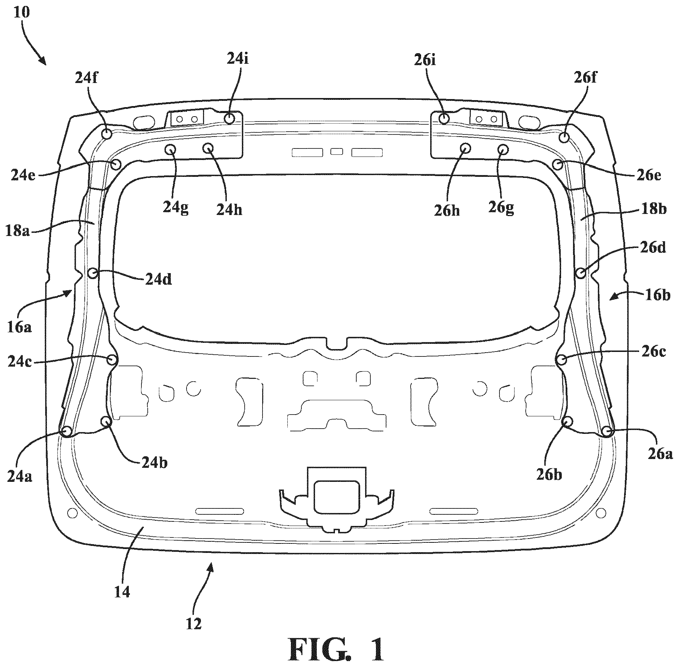

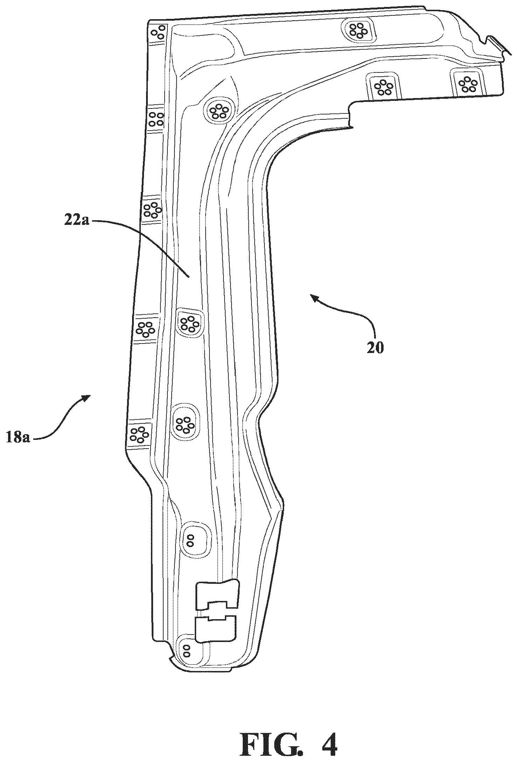

Referring now to the figures 1 and 2-6 there is shown a reinforced lift gate panel arrangement 10 that includes a lift gate panel 12 formed of fiber filled polymer material. The lift gate panel 12 has a structural side 14 two connection surface regions 16a, 16b. While two connection surface regions 16a, 16b are shown it is within the scope of this invention for there to be a lesser or greater number of connection surface regions depending on the needs of a particular application. The reinforced liftgate panel arrangement 10 further includes reinforcement bracket 18a, 18b each having a panel contact side 20a, 20b and a tool contact side 22a, 22b. Each reinforcement bracket 18a, 18b includes a number of connection regions 24a-i, 26a-i that each include apertures 28a-e formed through the respective reinforcement bracket 18a, 18b and extends from the panel contact side 20a, 20b to the tool contact side 22a, 22b. The connection surface regions 16a, 16b are shaped surfaces or regions on the structural side 14 of the lift gate panel 12 that allow all or a portion of the corresponding the reinforcement brackets 18a, 18b to have surface to surface contact with the structural side 14, so that a suitable mechanical connection can be formed. It is also within the scope of the invention for just each of the connection regions 24a-i, 26a-i to have surface to surface contact with the connection surface region 16a, 16b of the reinforcement bracket 18a, 18b. The present embodiment of the invention shows two once piece reinforcement brackets 18a, 18b it is within the scope of the invention for there to be a greater or lesser number of reinforcement brackets, or for them to be formed of multiple pieces.

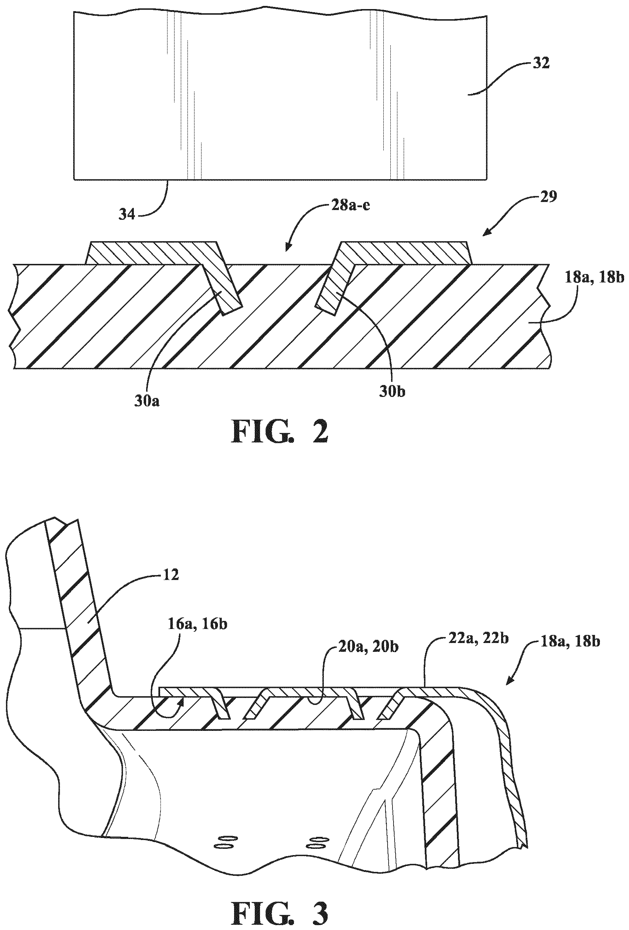

As described above each of the connection regions 24a-i, 26a-i include apertures 28a-e totaling five in number. While five apertures are shown it is within the scope of the invention for a greater or lesser number of apertures to be used. At each aperture, a mechanical lock is between the reinforcement bracket 18a, 18b and the liftgate panel 12 is formed using the method described below. Fig. 2 is a cross sectional view of a mechanical lock 29, which would be formed at each of the apertures 28a-e of the connection regions 24a-i, 26a-i described above. As shown the apertures 28a-e each have a draft angle 30a, 30b that is an angled edge of the material of the reinforcement bracket 18a, 18b. The fiber filled polymeric material of the lift gate panel 12 is melted in a localized region so that the draft angle 30a, 30b becomes embedded into the material of the lift gate panel 12 to form the mechanical lock 29 that is strengthened by the draft angle 30a, 30b providing more surface area and better embedding into the lift gate panel 12.

In the present embodiment of the invention the reinforcement brackets 18a, 18b are connected to the lift gate panel 12 using only the mechanical locks and without adhesives. Also, in the present embodiment of the invention the reinforcement bracket 18a, 18b are connected to the lift gate panel 12 using only the mechanical locks, without threaded fasteners.

Another embodiment of the present invention is directed to a method of connecting the reinforcement brackets 18a, 18b to the lift gate panel 12 for a vehicle. The method includes the steps of providing the reinforcement bracket 18a, 18b having a panel contact side 20a, 20b and a tool contact side 22a, 22b. The reinforcement bracket 18a, 18b is formed of metal or alloy. Suitable material includes iron, steel and aluminum. The reinforcement bracket 18a, 18b includes at least one aperture 28a-e formed through the reinforcement bracket 18a, 18b that extends from the panel contact side 20a, 20b to the tool contact side 22a, 22b. The method further includes providing the lift gate panel 12 having a structural side 14 with the connection surface region 16a, 16b. The lift gate panel 12 is formed of long fiber filled polymeric material. The lift gate panel 12 can be an inner panel, middle panel or outer panel of a lift gate. Suitable polymers for forming the liftgate inner panel include ABS, polypropylene and thermoplastic olefin materials, while suitable long fibers includes glass fibers, carbon fibers, or any other type of filler material.

The method further includes providing a lock forming tool 32 with an output surface 34. The lock forming tool 32 can take many forms depending on the requirements of a particular application. However, it is within the scope of this invention for the lock forming tool 32 to include, but not be limited to one of an ultrasonic welding tool, a microwave welding tool, an induction heating tool, a heat staking tool, and combinations thereof where several tools are used in unison or succession.

The method continues with a first step of placing the reinforcement bracket 18a, 18b against the structural side 14 of the lift gate panel 12, so that the panel contact side 20a, 20b is in contact with the connection surface region 16a, 16b of the lift gate panel 12. Then a step of positioning the lock forming tool 32 so that the output surface is in contact with the tool contact side of the reinforcement bracket is conducted. During this step, the output surface 34 surrounds the apertures 28a-e of the reinforcement bracket 18a, 18b.

Once the lock forming tool 32 is in position, a step of energizing the lock forming tool 32 occurs. During this step heating of a portion of the reinforcement bracket 18a, 18b and a portion of the lift gate panel 12 occurs. A localized molten unit of molten polymer of the lift gate panel 12 is formed and a part of the molten unit flows into the at least one aperture 28a-e of the reinforcement bracket. Then a step during a step the lock forming tool 32 is deenergized and removed from the reinforcement bracket 18a, 18b. At a step, the molten unit is cured to form a mechanical lock 29 that connects the reinforcement bracket to the lift gate inner panel.

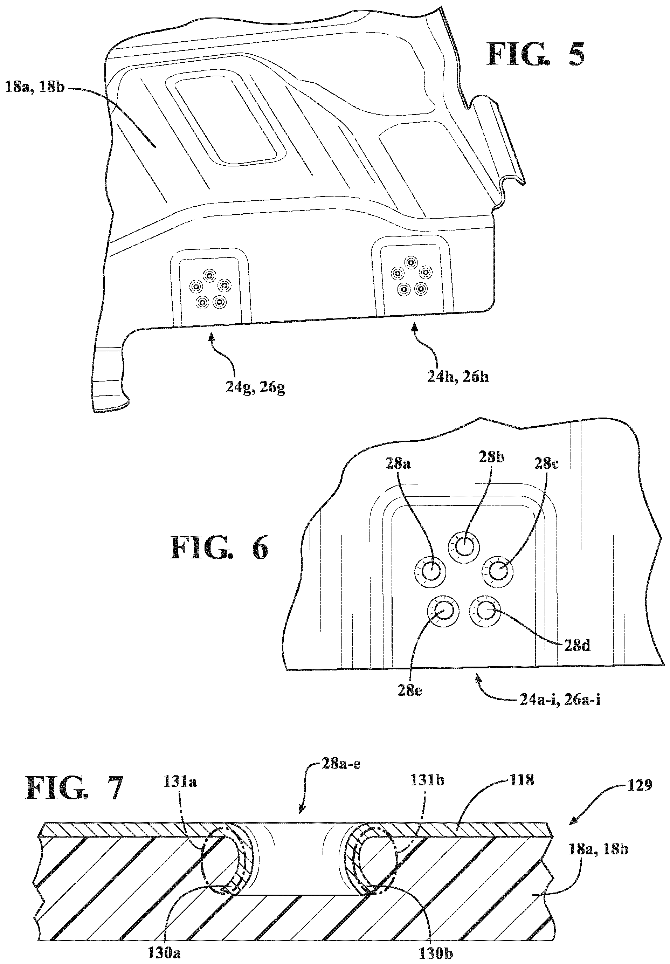

Fig. 7 is an enlarged cross sectional side elevational view of an alternative mechanical connection between a reinforcement bracket and a liftgate panel according to another embodiment of the invention. As shown in Fig.7 there is a cross sectional view of a mechanical lock 129, which would be formed at each of the apertures 28a-e of the connection regions 24a-i, 26a-i described above. The apertures 28a-e each have a concave draft angle 130a, 130b where a portion of the metal around the apertures 28a-e is curved back or bend backward to form a collar in the material of a reinforcement bracket 118, which can be used in place of reinforcement bracket 18a, 18b discussed above. The fiber filled polymeric material of the lift gate panel 12 is melted into a fixing region 131a, 131b and the concave draft angle 130a, 130b becomes embedded into the material of the lift gate panel 12 to form the mechanical lock 129, that is strengthened by the concave draft angle 130a, 130b providing more surface area and better embedding into the lift gate panel.

The description of the invention is merely exemplary in nature and, thus, variations that do not depart from the gist of the invention are intended to be within the scope of the invention. Such variations are not to be regarded as a departure from the spirit and scope of the invention.

## Claims

1. A reinforced lift gate panel (12) arrangement (10) comprising:
a lift gate panel (12) formed of fiber filled polymer material and having a structural side (14) with a connection surface region (16a, 16b);
at least one reinforcement bracket (18a, 18b) with a panel contact side (20a, 20b) and a tool contact side (22a, 22b), the reinforcement bracket (18a, 18b) includes at least one aperture (28a-e) formed through the reinforcement bracket (18a, 18b) that extends from the panel contact side (20a, 20b) to the tool contact side (22a, 22b);
at least one mechanical lock (29; 129) formed between the lift gate panel (12) and the reinforcement bracket (18a, 18b), wherein the mechanical lock (29; 129) is formed by a portion of the fiber filled polymer material curing in the at least one aperture (28a-e) of the reinforcement bracket (18a, 18b).

2. The reinforced lift gate panel (12) arrangement (10) of claim 1, wherein the at least one aperture (28a-e) further comprises a draft angle surface (30a, 30b; 130a, 130b) that the portion of the fiber filled material curing of the lift gate panel (12) extends into the molten unit and forms part of the mechanical lock (29; 129).

3. The reinforced lift gate panel (12) arrangement (10) of claim 1 or 2, wherein the at least one reinforcement bracket (18a, 18b) is connected to the lift gate panel (12) using only the at least one mechanical lock (29; 129) and without adhesives.

4. The reinforced lift gate panel (12) arrangement (10) of any one of claims 1 to 3, wherein the at least one reinforcement bracket (18a, 18b) is connected to the lift gate panel (12) using only the at least one mechanical lock (29; 129) and without threaded fasteners.

5. The reinforced lift gate panel (12) arrangement (10) of any one of claims 1 to 4, wherein the lift gate panel (12) is an inner panel of a lift gate.

6. The reinforced lift gate panel (12) arrangement (10) of any one of claims 1 to 5, wherein the at least one reinforcement bracket (18a, 18b) is metal or alloy.

7. The reinforced lift gate panel (12) arrangement (10) of any one of claims 1 to 6, wherein the at least one aperture (28a-e) further comprises:
a concave draft angle (130a, 130b) where a portion of the metal around the at least one aperture (28a-e) forms a collar in the material of the reinforcement bracket (18a, 18b), and
a fixing region (131a, 131b) and the concave draft angle (130a, 130b) becomes embedded into the material of the lift gate panel (12) to form the mechanical lock (129), which is strengthened by the concave draft angle (130a, 130b) providing more surface area and better embedding into the lift gate panel (12).

8. A method of connecting a reinforcement bracket (18a, 18b) to a lift gate panel (12) for a vehicle comprising the steps of:
providing a reinforcement bracket (18a, 18b) with a panel contact side (20a, 20b) and a tool contact side (22a, 22b), the reinforcement bracket (18a, 18b) includes at least one aperture (28a-e) formed through the reinforcement bracket (18a, 18b) that extends from the panel contact side (20a, 20b) to the tool contact side (22a, 22b);
providing a lift gate panel (12) having a structural side (14) with a connection surface region (16a, 16b);
providing a lock forming tool (32) with an output surface (34);
placing the reinforcement bracket (18a, 18b) against the structural side (14) of the lift gate panel (12) so that the panel contact side (20a, 20b) is in contact with the connection surface region (16a, 16b) of the lift gate panel (12);
positioning the lock forming tool (32) so that the output surface (34) is in contact with the tool contact side (22a, 22b) of the reinforcement bracket (18a, 18b), wherein the output surface (34) surrounds the at least one aperture (28a-e) of the reinforcement bracket (18a, 18b);
energizing the lock forming tool (32) and heating a portion of the lift gate panel (12) to form a localized molten unit, wherein a part of the molten unit flows into the at least one aperture (28a-e) of the reinforcement bracket (18a, 18b);
deenergizing the lock forming tool (32) and removing the lock forming tool (32) from the reinforcement bracket (18a, 18b);
curing the molten unit to form a mechanical lock (29; 129) that connects the reinforcement bracket (18a, 18b) to the lift gate inner panel.

9. The method of claim 8, wherein the at least one aperture (28a-e) further comprises a draft angle surface (30a, 30b; 130a, 130b) that extends into the molten unit and forms part of the mechanical lock (29; 129).

10. The method of claim 8 or 9, wherein the lock forming tool (32) is one from the group consisting of an ultrasonic welding tool, a microwave welding tool, an induction heating tool and a heat staking tool.

11. The method of any one of claims 8 to 10, wherein the at least one aperture (28a-e) further comprises:
a concave draft angle (130a, 130b) where a portion of the metal around the at least one aperture (28a-e) corms a collar in the material of the reinforcement bracket (18a, 18b), and
a fixing region (131a, 131b) and the concave draft angle (130a, 130b) becomes embedded into the material of the lift gate panel (12) to form the mechanical lock (29; 129), which is strengthened by the concave draft angle (130a, 130b) providing more surface area and better embedding into the lift gate panel (12).
